# EUROPEAN PATENT APPLICATION

(11) **EP 4 564 560 A1**
(43) Date of publication of application: **04.06.2025**
(21) Application number: 22955314.4
(22) Date of filing: 17.08.2022
(51) Int. Cl.: H01M 50/30, H01M 50/209, H01M 10/6556

(54) **BATTERY AND ELECTRIC DEVICE**

(71) Applicant: Contemporary Amperex Technology (Hong Kong) Limited, Central, Hong Kong (HK)
(72) Inventor: ZHANG, Chenchen, Ningde, Fujian 352100 (CN); JIN, Haizu, Ningde, Fujian 352100 (CN); NIU, Shaojun, Ningde, Fujian 352100 (CN); LI, Xing, Ningde, Fujian 352100 (CN); LI, Zhenhua, Ningde, Fujian 352100 (CN)
(74) Representative: Ziebig Hengelhaupt Intellectual Property Attorneys Patentanwaltskanzlei PartGmbB
(86) International application number: PCT/CN2022/113154
(87) International publication number: WO 2024/036533

(57) **Abstract**

A battery and an electrical device are provided. The battery includes at least one cell group. Each of the at least one cell group includes two cell rows. Each of the two cell rows includes at least one cell. In one cell group, each of the at least one cell in one of the two cell rows has a first end surface facing towards another one of the two cell rows. The first end surface is provided with a pressure relief structure. The cell has an electrical connection terminal at a surface of the cell other than the first end surface.

## Description

### FIELD

The present disclosure relates to the field of battery technologies, and more particularly, to a battery and an electrical device.

### BACKGROUND

In the related art, when internal pressure of a battery is too high, safe use of the battery is ensured by pressure relief. However, during the pressure relief of the battery, an ejected emission is prone to flow into an electrical connection region of the battery, leading to high-voltage arcing.

### SUMMARY

The present disclosure aims to solve at least one of the technical problems in the related art. To this end, the present discourse provides a battery that can reduce an impact of an emission discharged from a pressure relief structure on an electrical connection terminal to avoid an insulation failure, high-voltage arcing, etc., thereby embodying good use safety and use reliability.

The present disclosure further provides an electrical device having the above-mentioned battery.

A battery according to an embodiment of a first aspect of the present disclosure includes at least one cell group. Each of the at least one cell group includes two cell rows. Each of the two cell rows includes at least one cell. In one of the at least one cell group, each of the at least one cell in one of the two cell rows has a first end surface facing towards another one of the two cell rows. The first end surface is provided with a pressure relief structure. The cell has an electrical connection terminal at a surface of the cell other than the first end surface.

According to the battery of the embodiment of the present disclosure, by arranging the pressure relief structure and the electrical connection terminal of the cell at different surfaces of the cell respectively, it is effective to prevent the emission, such as particles, of the cell discharged through the pressure relief structure from flowing to the electrical connection terminal, thereby avoiding a problem, such as the insulation failure and the high-voltage arcing. In this way, use safety and use reliability of the battery are ensured.

In some embodiments, in one of the at least one cell group, each of the at least one cell in one of the two cell rows has a second end surface facing away from another one of the two cell rows. The electrical connection terminal of the cell is disposed at the second end surface.

In some embodiments, in one of the at least one cell group, each of the at least one cell in one of the two cell rows has a second end surface facing away from another one of the two cell rows and a peripheral wall surface located between the first end surface and the second end surface. The electrical connection terminal of the cell is disposed at the peripheral wall surface.

In some embodiments, each of the two cell rows includes a plurality of cells arranged in a first direction; the two cell rows of the cell group are arranged in a second direction; and the peripheral wall surface includes two third end surfaces opposite to each other in a third direction. The electrical connection terminal of the cell is disposed at the third end surface. The first direction, the second direction, and the third direction are perpendicular to each other.

In some embodiments, in one of the at least one cell group, orthographic projections of the pressure relief structures in the two cell rows in a direction in which the two cell rows are arranged opposite to each other are offset.

In some embodiments, in one of the at least one cell group, the pressure relief structures in the two cell rows are offset from each other in a length direction of the cell row or a height direction of the cell row.

In some embodiments, the pressure relief structure is disposed at a middle part of the first end surface; and in one of the at least one cell group, orthographic projections of the cells in the two cell rows in the direction in which the two cell rows are arranged opposite each other are offset.

In some embodiments, in one of the at least one cell group, the cells in the two cell rows are offset from each other in a length direction of the battery.

In some embodiments, each of the two cell rows includes a plurality of cells arranged in a length direction of the cell row.

In some embodiments, the at least one cell group includes a plurality of cell groups. The plurality of cell groups is arranged in a height direction of the cell row to constitute a battery unit.

In some embodiments, the number of the plurality of cell groups in the battery unit is smaller than the number of the plurality of cells in each of the two cell rows.

In some embodiments, the number of the plurality of cell groups in the battery unit ranges from 1 to 3.

In some embodiments, the cell has a thickness direction consistent with a height direction of the battery.

In some embodiments, the cell is a ternary lithium battery.

In some embodiments, the battery further includes a discharge member disposed between the two cell rows in one cell group and defining a discharge chamber. The discharge chamber is configured to receive an emission of the at least one cell group discharged from the pressure relief structure.

In some embodiments, the discharge member has inlet regions corresponding to the pressure relief structures and formed at side surfaces of the discharge member that face towards the two cell rows respectively. The discharge chamber is configured to receive, through the inlet regions, the emission discharged from the pressure relief structures.

In some embodiments, orthographic projections of the inlet regions at two opposite sides of the discharge member in a direction in which the two cell rows are arranged are offset in a length direction of the discharge member.

In some embodiments, a periphery of each of the inlet regions is provided with an insulation member.

In some embodiments, the battery further includes a case component including a side enclosure plate and a separation beam disposed in a space enclosed by the side enclosure plate. The space is divided into a plurality of accommodation chambers through the separation beam. Each of the plurality of accommodation chambers is configured to accommodate the cell row. The separation beam is constructed as the discharge member.

In some embodiments, the battery further includes a heat exchange member disposed between the two cell rows in one cell group and configured to exchange heat with at least one of the two cell rows.

In some embodiments, the battery further includes a case component including a side enclosure plate and a separation beam disposed in a space enclosed by the side enclosure plate. The space is divided into a plurality of accommodation chambers through the separation beam. Each of the plurality of accommodation chambers is configured to accommodate the cell row. The separation beam is constructed as the heat exchange member.

In some embodiments, the battery further includes a thermal management assembly disposed between the two cell rows in one cell group and including a discharge member and heat exchange members. The discharge member is configured to receive an emission of the at least one cell group discharged from the pressure relief structure. The heat exchange members are respectively provided at two sides of the discharge member in a thickness direction of the discharge member. Each of the heat exchange members is disposed between the discharge member and the cell row and configured to exchange heat with a cell row at a corresponding side of the heat exchange member. At least part of the discharge member is configured to exchange heat with the heat exchange member.

In some embodiments, each of the heat exchange members defines a heat exchange chamber. The heat exchange chamber has an inlet and an outlet. A heat exchange medium is allowed to flow into the heat exchange chamber through the inlet and flow out of the heat exchange chamber through the outlet. The heat exchange chambers at the two sides of the discharge member in the thickness direction of the discharge member are connected in series or in parallel.

In some embodiments, an outer side plate of the thermal management assembly is constructed as the heat exchange member. The outer side plate has an inlet region corresponding to the pressure relief structure. The discharge member defines a discharge chamber. The discharge chamber is configured to receive, through the inlet region, an emission discharged from the pressure relief structure.

In some embodiments, a heat conductive member is disposed between the heat exchange member and the discharge member.

In some embodiments, the battery further includes a case component including a side enclosure plate and a separation beam disposed in a space enclosed by the side enclosure plate. The space is divided into a plurality of accommodation chambers through the separation beam. Each of the plurality of accommodation chambers is configured to accommodate the cell row. The separation beam is constructed as the thermal management assembly.

In some embodiments, the separation beam includes a longitudinal beam extending in a length direction of the case component; or the separation beam includes a transverse beam extending in a width direction of the case component; or the separation beam includes a longitudinal beam extending in a length direction of the case component and a transverse beam extending in a width direction of the case component.

In some embodiments, the side enclosure plate is formed with a discharge path in communication with the discharge chamber of the discharge member.

In some embodiments, the battery further includes a case component. The case component includes a top cover. The thermal management assembly is disposed in the top cover.

In some embodiments, the battery further includes a case component. The case component includes a bottom plate. The thermal management assembly is disposed in the bottom plate.

In some embodiments, the battery further includes a case component and a fixing member. The case component defines an accommodation chamber configured to accommodate the cell row. The fixing member is disposed in the case component and fixedly connected to the case component. The fixing member is disposed at a side of the cell row in a thickness direction of the cell row and abutting against outermost cell rows.

An electrical device according to an embodiment of a second aspect of the present disclosure includes the battery according to the embodiment of the first aspect of the present disclosure. The battery is configured to provide electric energy for the electrical device.

According to the electrical device of the embodiments of the present disclosure, use safety and use reliability of the electrical device can be improved by using the above-mentioned battery.

Additional aspects and advantages of the embodiments of present disclosure will be provided at least in part in the following description, or will become apparent in part from the following description, or can be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings.
FIG. 1 is a schematic view of an electrical device in the related art.
FIG. 2 is a schematic view of a battery shown in FIG. 1.
FIG. 3 is a schematic view of a battery according to an embodiment of the present disclosure.
FIG. 4 is a schematic view of a cell shown in FIG. 3.
FIG. 5 is a schematic view of another embodiment of a cell shown in FIG. 3.
FIG. 6 is a schematic view of yet another embodiment of a cell shown in FIG. 3.
FIG. 7 is an exploded view of still yet another embodiment of a cell shown in FIG. 3.
FIG. 8 is a schematic view of a battery according to an embodiment of the present disclosure.
FIG. 9 is a schematic view of a battery according to another embodiment of the present disclosure.
FIG. 10 is a schematic view of a battery according to yet another embodiment of the present disclosure.
FIG. 11 is a schematic view of a battery according to an embodiment of the present disclosure.
FIG. 12 is an exploded view of a battery shown in FIG. 11.
FIG. 13 is an exploded view of a battery shown in FIG. 11.
FIG. 14 is an exploded view of a thermal management assembly shown in FIG. 11.
FIG. 15 is a schematic view of an arrangement of inlet regions of a thermal management assembly according to an embodiment of the present disclosure.
FIG. 16 is a schematic view of an assembly of a thermal management assembly with a cell according to another embodiment of the present disclosure.
FIG. 17 is a schematic view of an assembly of a thermal management assembly with a cell according to yet another embodiment of the present disclosure.
FIG. 18 is a schematic view of an assembly of a thermal management assembly with a cell according to still yet another embodiment of the present disclosure.
FIG. 19 is an exploded view of a battery according to an embodiment of the present disclosure.
FIG. 20 is a partial schematic view of a case component shown in FIG. 19.
FIG. 21 is a schematic view of a case component according to another embodiment of the present disclosure.
FIG. 22 is a schematic view of a case component according to yet another embodiment of the present disclosure.
FIG. 23 is an exploded view of a battery according to another embodiment of the present disclosure.
FIG. 24 is a partial schematic view of the battery shown in FIG. 23, where an arrow represents a flow direction of an emission.
FIG. 25 is a schematic view of an emission discharged by a thermal management assembly shown in FIG. 24, where an arrow represents a flow direction of the emission.
FIG. 26 is a schematic view of an emission discharged by a thermal management assembly according to another embodiment of the present disclosure, where an arrow represents a flow direction of the emission.
FIG. 27 is a schematic view of an electrical device according to an embodiment of the present disclosure.

Reference numerals:
battery 100, electrical device 200,
cell group 1, cell row 11, cell 111, pressure relief structure 1111, electrical connection terminal 1112, core 1113, housing 1114, end plate 112, thermal insulation member 113,
first end surface 111a, second end surface 111b, peripheral wall surface 111c, third end surface 111d, fourth end surface 111e,
battery unit 2,
thermal management assembly 3, discharge chamber 3a, inlet region 3b, heat exchange chambers 3c,
discharge member 31, heat exchange member 32, outer side plate 33, inlet 32a, outlet 32b,
case component 4, side enclosure plate 41, space 410, accommodation chambers 410a, separation beam 42, longitudinal beam 421, transverse beam 422, top cover 43, bottom plate 44, and
fixing member 5.

### DETAILED DESCRIPTION

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain rather than limit the present disclosure.

The following publicly provides a number of different embodiments or examples used to realize different structures of the present disclosure. In order to simplify the present disclosure, components and settings of particular examples are described below. They are, of course, only examples and are not intended to limit the present disclosure. Furthermore, the present disclosure may repeat reference numbers and/or letters in different examples. Such repetition is for purposes of simplicity and clarity and is not in itself indicative of a relationship between the various embodiments and/or settings discussed. In addition, various specific examples of processes and materials are provided in this disclosure, but those skilled in the art may realize the applicability of other processes and/or the use of other materials.

In the description of the present disclosure, it is to be understood that, terms such as "center", "longitudinal", "lateral", "length", "width", "thickness", "over", "below", "front", "back", "left", "right", "vertical", "horizontal", "top", "bottom", "in", "out", "clockwise", "counterclockwise", "axial", "radial", "circumferential", etc., is based on the orientation or position relationship illustrated in the drawings, and is only for the convenience of describing the present disclosure and simplifying the description, rather than indicating or implying that the associated device or element must have a specific orientation, or be constructed and operated in a specific orientation, and therefore cannot be understood as a limitation on the present disclosure. In addition, the features associated with "first" and "second" may explicitly or implicitly include at least one of the features. In the description of the present disclosure, "a plurality of" means at least two, unless otherwise specifically defined.

In the description of the embodiments of the present disclosure, unless specified or limited otherwise, the technical terms "mounted," "connected," and "coupled" are understood broadly, such as a fixed connection or a detachable connection or connection as one piece; mechanical connection or electrical connection; direct connection or indirect connection through an intermediate; internal communication of two components. For those skilled in the art, the specific meaning of the above-mentioned terms in the embodiments of the present disclosure can be understood according to specific circumstances.

In the description of this specification, descriptions with reference to the terms "an embodiment", "some embodiments", "an exemplary embodiment", "an example", "a specific example", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials, or characteristics may be combined in any one or more embodiments or examples in a suitable manner.

A cell in the present disclosure may include a lithium-ion secondary battery, a lithium-ion primary battery, a lithium sulfur battery, a sodium lithium-ion battery, a sodium ion battery or a magnesium ion battery, etc., which are not limited in the embodiments of the present disclosure. The cell may be in a shape of a cylinder, a flat body, a cuboid, or other shapes, which are not limited in the embodiments of the present disclosure. The cell is generally divided into three types based on a packaging method: a cylinder-shaped cell, a square-shaped cell, and a soft-pack cell, which are not limited in the embodiment of the present disclosure.

A battery mentioned in the embodiments of the present disclosure refers to a single physical module including one or more cells to provide a higher voltage and capacity. For example, the battery mentioned in the present disclosure may include a battery module or a battery pack. The battery generally includes a case for packaging one or more cells. The case can prevent liquid or other foreign matters from affecting charging or discharging of the cell.

The cell may include a housing, an electrode assembly, and an electrolyte. The housing is configured to accommodate the electrode assembly, and the electrolyte. The electrode assembly consists of a positive electrode plate, a negative electrode plate, and a separator. Operation of the electrode assembly primarily relies on a movement of metallic ions between the positive and negative electrode plates. The positive electrode plate includes a positive electrode current collector and a positive electrode active material layer. The positive electrode active material layer is coated at a surface of the positive electrode current collector. A part of the positive electrode current collector that is not coated with the positive electrode active material layer protrudes from a part that has been coated with the positive electrode active material layer. The part that is not coated with the positive active material layer serves as a positive electrode tab. A lithium-ion battery is taken as an example, a material of a positive electrode current collector may be aluminum, and a positive electrode active material may be lithium cobalt oxide, lithium iron phosphate, ternary lithium, lithium manganate, etc. A negative electrode plate includes a negative electrode current collector and a negative electrode active material layer. The negative electrode active material layer is coated at a surface of the negative electrode current collector. A part of the negative electrode current collector that is not coated with the negative electrode active material layer protrudes from a part that has been coated with the negative electrode active material layer. The part that is not coated with the negative electrode active material layer serves as a negative electrode tab. A material of the negative electrode current collector may be copper, and a negative electrode active material may be carbon, silicon, etc. To ensure no fusing during passing through a high current, a plurality of positive electrode tabs is provided and stacked together, and a plurality of negative electrode tabs is provided and stacked together.

A material of the separator may be Polypropylene (PP), Polyethylene (PE), or the like. In addition, the electrode assembly may have a winding structure or a laminated structure, and the embodiments of the present disclosure are not limited thereto.

A pressure relief structure of a cell mentioned in the present disclosure, when internal pressure of the cell is too high (e.g., due to overcharging), is used to release internal gas of the cell to reduce the internal pressure of the cell, and to prevent explosive combustion caused by rapid pressurization inside the cell. For example, the pressure relief structure may be explosion-proof valve, explosion-proof sheet, etc.

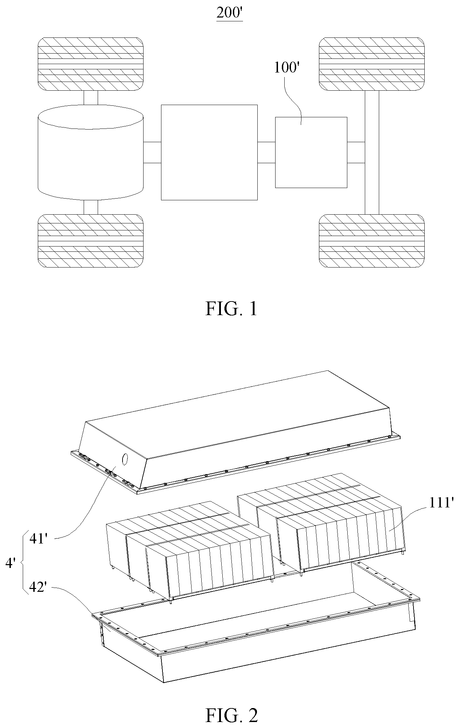

In some electrical devices 200 (as illustrated in FIG. 1), a battery 100' (as illustrated in FIG. 2) is used for power supply, the battery 100' includes a case 4' and a cell 111', and the case 4' incudes an upper box 41' and a lower box 42'. In the conventional art, an electrical connection terminal and the pressure relief mechanism are arranged at one end surface in a cell of a square shell structure. However, when the pressure relief mechanism actuates a spray valve to release the internal pressure of the cell, conductive particles in an emission of the cell often easily move to the electrical connection terminal and overlap with the electrical connection terminal, which forms an internal short circuit, or reduces creepage clearance between the conductive components, leading to insulation failure phenomena such as high-voltage arcing.

Accordingly, in order to avoid the insulation failure problem easily caused when the internal pressure of the cell is released, the electrical connection terminal of the cell and the pressure relief mechanism can be arranged on different end surfaces of the square shell cell respectively. However, in the battery, in order to allow the battery to have an appropriate voltage and capacity, a plurality of cells are often arranged and placed in multiple rows and columns, but the above structure can only allow the electrical connection terminal of each cell far away from its pressure relief structure.

Based on this, a battery is provided after intensive research. The battery includes at least one cell group. Each of the at least one cell group includes two cell rows. Each of the two cell rows includes at least one cell. In one of the at least one cell group, each of the at least one cell in one of the two cell rows has a first end surface facing towards another one of the two cell rows. The first end surface is provided with a pressure relief structure. The cell has an electrical connection terminal at a surface of the cell other than the first end surface.

In the battery with the above structure, by arranging the pressure relief structure of the cell and the electrical connection terminal of the cell at different end surfaces of the cell respectively, it is effective to prevent the emission such as the particles of the cell discharged through the pressure relief structure from flowing to the electrical connection terminal, thereby avoiding the insulation failure phenomena such as the high-voltage arcing. In this way, creepage clearance of each conductive component in the battery is ensured, thereby avoiding internal short circuit. Meanwhile, in one cell group, the electrical connection terminal of the cell in one of the two cell rows is not arranged opposite to the pressure relief structure in another one of the two cell rows, and therefore the electrical connection terminal of the cell is protected from an influence of an emission discharged by other cells to ensure use safety and use reliability of the battery.

The battery disclosed in the embodiments of the present disclosure may be, but is not limited to, used in an electrical device such as a vehicle, a ship, or an aircraft, and the battery disclosed in the present disclosure may be used to form a power supply system of the electrical device to ensure the use safety and the use reliability of the electrical device.

The electrical device disclosed in the embodiments of the present disclosure may be, but is not limited to, a vehicle, a cell phone, a tablet, a laptop computer, a ship, a spacecraft, an electric toy, a power tool, and the like. The vehicle may be a fuel vehicle, or a gas vehicle, or a new energy vehicle, or a rail vehicle. The new energy vehicle may be a pure electric vehicle, a hybrid vehicle, or an extended-range vehicle, etc. The spacecraft includes an airplane, a rocket, a space shuttle, a spacecraft, and the like. The electric toy includes a stationary or movable electric toy, such as a game console, an electric car toy, an electric boat toy, and an electric airplane toy, and the like. The power tool includes a metal cutting power tool, a grinding power tool, an assembly power tool, and a railway power tool, such as an electric drill, an electric sander, an electric wrench, an electric screwdriver, an electric hammer, an impact drill, a concrete vibrator, and an electric planer.

Hereinafter, a battery 100 according to an embodiment of the present disclosure will be described with reference to the accompanying drawings.

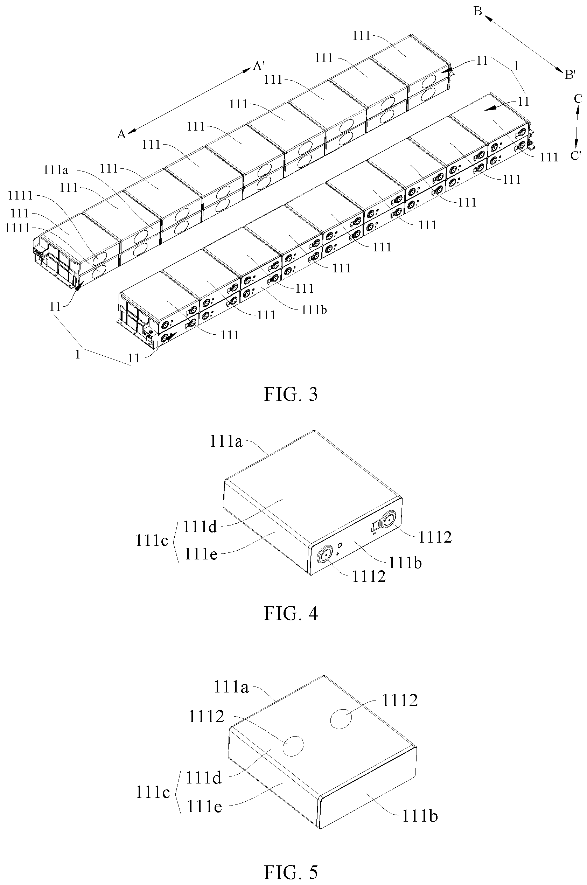

As illustrated in FIG. 3, a battery 100 includes at least one cell group 1. Each of the at least one cell group 1 includes two cell rows 11. Each of the two cell rows 11 includes at least one cell 111. In one of the at least one cell group 1, each of the at least one cell 111 in one of the two cell rows 11 has a first end surface 111a facing towards another one of the two cell rows 11. The first end surface 111a is provided with a pressure relief structure 1111. The cell 111 has an electrical connection terminal 1112 at a surface of the cell 111 other than the first end surface 111a.

It can be seen that since the electrical connection terminal 1112 of the cell 111 and the pressure relief structure 1111 of the cell 111 are respectively located at different surfaces of the cell 111, it is ensured that there is a relatively large distance between the electrical connection terminal 1112 and the pressure relief structure 1111 of the cell 111, which effectively prevents the emission, such as the particles, of the cell 111 discharged through the pressure relief structure 1111 (e.g., under thermal runaway of the cell 111) from flowing to the electrical connection terminal 1112 of the cell 111, thereby avoiding the problem, such as the insulation failure, the high-voltage arcing. Meanwhile, in one cell group, the electrical connection terminal 1112 of the cell 111 in one of the two cell rows 11 is not arranged opposite to the pressure relief structure 1111 in another one of the two cell rows 11, and therefore the electrical connection terminal 1112 of the cell 111 is easily protected from the influence of the emission of other cells 111 discharged through the pressure relief structures 1111, and an influence of the emission of the cell 111 discharged through the pressure relief structure 111 on the electrical connection terminals 1112 of other cells 111 is reduced to avoid the cell 111. In this way, the safety and the reliability of the battery in use are ensured.

In addition, since the pressure relief structures 1111 in one of the two cell rows 11 in one cell group 1 are arranged opposite to the pressure relief structures 1111 in another one of the two cell rows 11, it is beneficial to centrally receive the emission from the two cell rows 11 in one cell group 1, thereby helping to reduce a number of components of the battery 100 and simplify the structure of the battery 100.

According to the battery 100 of the embodiment of the present disclosure, by arranging the pressure relief structure 1111 of the cell 111 and the electrical connection terminal 1112 of the cell 111 at the different surfaces of the cell 111 respectively, it is effective to prevent the emission, for example, including the particles, of the cell 111 discharged through the pressure relief structure 1111 (e.g., under the thermal runaway of the cell 111) from flowing to the electrical connection terminal 1112, thereby avoiding the insulation failure problem, such as the high-voltage arcing. In this way, the use safety and the use reliability of the battery 100 are ensured.

In some embodiments, as illustrated in FIGS. 3 and 4, in one cell group 1, a cell 111 in one of the two cell rows has a second end surface 111b facing away from another one of the two cell rows 11, then for one cell 111, the first end surface 111a and the second end surface 111b are arranged opposite to each other. The electrical connection terminal 1112 of the cell 111 is disposed at the second end surface 111b, then the pressure relief structure 1111 of the cell 111 and the electrical connection terminal 1112 of the cell 111 are arranged opposite to each other in a direction in which the two cell rows 11 in one cell group 1 are arranged. Thus, a distance between the pressure relief structure 1111 of the cell 111 and the electrical connection terminal 1112 of the cell 111 can be further increased. As a result, the electrical connection terminal 1112 is far away from the pressure relief structure 1111, which further prevents heat generated the high-temperature emission of the cell 111 discharged through the pressure relief structure 1111 from causing an adversely thermal influence on an electrical connection implemented at the electrical connection terminal 1112. In further, can reduce the insulation failure risk caused by leakage of the particles in the emission to an electrical connection region at the electrical connection terminal 1112 simultaneously. In this way, the use reliability and the use safety of the battery 100 is effectively ensured.

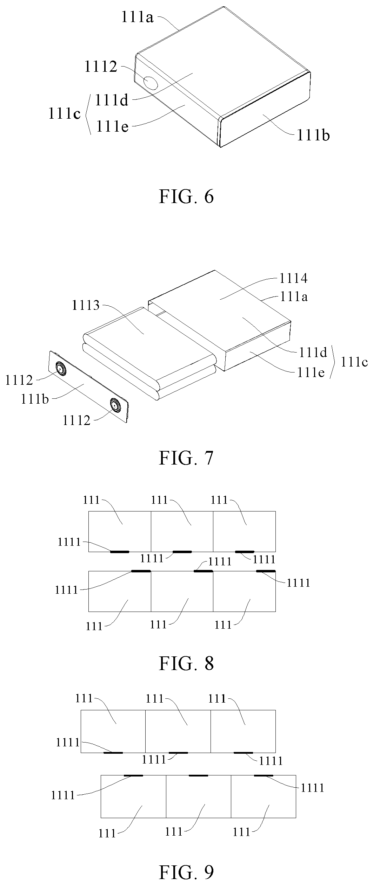

It can be seen that by disposing the electrical connection terminal 1112 at the second end surface 111b, a distance between the electrical connection region of the cell 111 and the pressure relief structure 1111 can be maximized. If the battery 100 further includes a discharge member 31 having a discharge chamber 3a configured to receive an emission of the cell 111 discharged by the pressure relief structure 1111, then the distance between the electrical connection region and the discharge chamber 3a can also be maximized by arranging the electrical connection terminal 1112 in above-mentioned manner, which can effectively improve insulation safety. Meanwhile, for a cell 111 formed by winding a bare core (as illustrated in FIG. 7), this cell 111 includes a housing 1114 and a core 1113 disposed in the housing 1114. The core 1113 is formed through winding. In this case, tabs may be respectively arranged at two ends of the core 1113 in an axial winding direction, and an electrical connection terminal 1112 and a pressure relief structure 1111 are respectively arranged at the two ends of the core 1113 in the axial winding direction. As a result, a lead-out path of the tab and the electrical connection terminal 1112 can be shortened. Meanwhile, a discharge direction of the emission approximates to the axial winding direction, and the emission between layers can thus smoothly pass through the layers to ensure smoother discharge, for example, smoother gas discharge.

In addition, the cell 111 is prone to leakage such as electrolyte leakage at a position of the pressure relief structure 1111. However, since the pressure relief structure 1111 is arranged opposite to the electrical connection terminal 1112, a distance between the leakage position and the electrical connection region is relatively far to further ensure the use safety of the cell 111.

It can be understood that, when a discharge member 31 described below is disposed between the two cell rows 11 in one cell group 1, the electrical connection terminal 1112 is disposed at the second end surface 111b. As a result, the electrical connection terminal 1112 is far away from the discharge member 31 while being far away from the pressure relief structure 1111, which prevents a high temperature generated the emission and guiding gas discharged from the discharge member 31 from causing an adversely thermal influence on the electrical connection implemented at the electrical connection terminals 1112, and can reduce a probability of the insulation failure caused by the leakage of the particles in the emission to the electrical connection region when guiding the gas from the discharge member 31. In this way, the use safety of the battery 100 is ensured.

In addition, when a heat exchange member 32 is disposed between the two cell rows 111 in one cell group 1, if a liquid heat exchange medium is provided in the heat exchange member 32, a distance between the electrical connection terminal 1112 and the heat exchange member 32 can be increased by disposing the electrical connection terminal 1112 at the second end surface 111b, and therefore the electrical connection terminal 1112 is far away from the heat exchange member 32 while being far away from the pressure relief structure 1111 of the corresponding cell 111, and even if the liquid heat exchange medium in the heat exchange member 32 leaks, the electrical connection region formed by the electrical connection terminal 1112 is not easily affected, to avoid conduction of the electrical connection region by means of leakage of the liquid heat exchange medium, and thus to ensure reliable insulation.

In some embodiments, as illustrated in FIGS. 3, 5 and 6, in one cell group 1, the cell 111 in one of the two cell rows 11 has a second end surface 111b facing away from another one of the two cell rows 11 and peripheral wall surface 111c located between the first end surface 111a and the second end surface 111b, and the electrical connection terminal 1112 of the cell 111 is disposed at the peripheral wall surface 111c. This likewise can ensure that there is an appropriate spacing between the electrical connection terminal 1112 of the cell 111 and the pressure relief structure 1111 of the cell 111 to ensure the use reliability and the use safety of the battery 100.

In some embodiments, as illustrated in FIGS. 3 and 5, each of the two cell rows 11 includes a plurality of cells 111 arranged in a first direction.(e.g., a direction AA' in FIG. 3, a length direction of the cell row 11), the two cell rows 11 of the cell group 1 are arranged in a second direction (e.g., a direction BB' in FIG. 3, a width direction or a height direction of the cell row 11), and the peripheral wall surface 111c includes two third end surfaces 111d arranged opposite to each other in a third direction (e.g., a direction CC' in FIG. 3, a height direction or a width direction of the cell row 11). The electrical connection terminal 1112 of cell 111 is disposed at the third end surface 111d. The first direction, the second direction, and the third direction are perpendicular to each other.

For example, in the examples of FIGS. 3 and 5, the cell 111 has a hexahedral structure. A cell 111 of a cuboid structure is taken as an example. The third direction is an up-down direction, and the third end surface 111d is a top surface of the cell 111. As such, the electrical connection of the cell 111 is performed on the top surface of the cell 111, which helps to reduce a difficulty of putting PACK into the case. The battery 100 can put into the case at once after being grouped, which helps to improve fitting efficiency of the battery 100.

Of course, the present disclosure is not limited thereto. In an example illustrated in FIG. 6, the peripheral wall surface 111c includes two fourth end surfaces 111e arranged opposite to each other in the first direction, and the electrical connection terminal 1112 of the cell 111 is disposed at the fourth end surface 111e. In this case, for the electrical connection terminal 1112 of the cell 111, two electrical connection terminals 1112 may be selected to be located at one fourth end surface 111e or at different fourth end surfaces 111e based on a setting position of the cell 111. Therefore, when the first direction is a horizontal direction, an occupied space of a single cell 111 in a height direction can be reduced. As a result, an overall structure of the Pack of the battery 100 in the height direction is more compact, which helps to reduce an overall height of the PACK. When the battery 100 with such a structure is mounted at an electrical device 200, such as a chassis of a vehicle, a problem of ground clearance of the chassis can be easily solved, which can prolong a service life of the PACK.

In some embodiments, as illustrated in FIGS. 3 and 8, in one cell group 1, orthographic projections of the pressure relief structures 1111 in the two cell rows 11 in a direction in which the two cell rows 11 are arranged opposite to each other (e.g., a direction BB' in FIG. 3)are offset, then in one cell group 1, orthographic projections of the pressure relief structures 1111 in the two cell rows 11 in a direction in which the two cell rows 11 are arranged are at least partially nonoverlapping. When one of the cells 111 discharges the emission through the pressure relief structures 1111, at least part of the emission can be prevented from being sprayed towards another cell 111 arranged opposite to this cell 111, which helps to avoid a loss of control for the other cell 111 to reduce a spread rate of thermal runaway inside the battery 100. When the two opposite cells 111 discharge the emissions through the pressure relief structures 111 respectively, it is beneficial to avoid opposite spraying when corresponding cells 111 at two thickness sides of the cell row 11 discharge the emission respectively, to avoid the cell 111 from being thermally affected by other cells 111, and further to reduce a probability of heat spread.

In some embodiments, as illustrated in FIG. 8, in one cell group 1, the pressure relief structures 1111 in the two cell rows 11 are offset from each other in a length direction of the cell row 11, to facilitate the arrangement of the pressure relief structures 1111 of the cells 111. Of course, the present application is not limited thereto. In other embodiments, in the cell group 1, the pressure relief structures 1111 in the two cell rows 11 are offset from each other in a height direction of the cell row 11 (e.g., a direction CC' in FIG. 3).

In some embodiments, as illustrated in FIG. 9, the pressure relief structure 1111 is disposed at a middle part of the first end surface 111a, and in the cell group 1, orthographic projections of the cells 111 in the two cell rows 11 on the direction in which the two cell rows 11 are arranged opposite to each other are offset, to ensure that in the cell group 1, the orthographic projections of the pressure relief structures 1111 in the two cell rows 11 on the direction in which the two cell rows 11 are arranged opposite to each other are offset. In this case, a plurality of cells 111 may adopt the same specifications.

For example, the pressure relief structure 1111 is disposed at a middle part of the first end surface 111a, which can be understood as follows. 1. The pressure relief structure 111 is disposed at a middle part of the first end surface 111a in the length direction of the cell row 11. As illustrated in FIG. 9, in this case, in the cell group 1, the cells 111 in the two cell rows 111 may be offset from each other in a length direction of the cell row 111. 2. The pressure relief structure 111 is disposed at a middle part of the first end surface 111a in a height direction of the cell row 11. In this case, in the cell group 1, the cells 111 in the two cell rows 111 may be offset from each other in a height direction of the cell row 111. 3. The pressure relief structure 111 is disposed at a middle part of the first end surface 111a in a length direction and a height direction of the cell row 11. In this case, in the cell group 1, the cells 111 of two cell rows 111 may be offset from each other in a height direction and/or a length direction of the cell row 111.

Of course, the present disclosure is not limited thereto. For example, in the cell group 1, the cells 111 in the two cell rows 11 may be aligned with each other. In this case, the pressure relief structure 1111 may be arranged offset from the middle part of the cell 111 in the length direction or the height direction of the cell row 11, and the pressure relief structures 1111 in the two cell rows 11 in the cell group 1 may likewise be offset.

In some embodiments, as illustrated in FIG. 3, each cell row 11 includes a plurality of cells 111 arranged in a length direction of the cell row 11 (e.g., a direction AA' in FIG. 3), to meet a voltage and other requirements of the cell row 11.

It can be understood that, when the cell row 11 includes a plurality of cells 111, the cells 111 in the two cell rows 11 in the cell group 1 are offset, which can be understood as the corresponding cells 111 of the above two cell rows 11 are offset; and in the cell group 1, the number of cells 111 in the two cell rows 11 may be equal or different.

In some embodiments, as illustrated in FIG. 3, a plurality of cell groups 1 is arranged in a height direction of the cell row 11 to constitute a battery unit 2, which helps to realize compact arrangement of the plurality of cell groups 1 for reasonably utilizing a space 410 inside the battery 100 to improve a space utilization rate.

In addition, when cell 111 is laid flat as described below, it is advantageous to reduce a height of battery unit 2. It can be understood that battery 100 includes one or more battery units 2.

In some embodiments, as illustrated in FIG. 3, the number of the cell groups 1 in the battery unit 2 is smaller than the number of the cell group 1 in the cell row 11.Therefore, on a premise of ensuring the arrangement of the cell row 11, it is easy to reduce an extrusion force that the cell row 11 bears in the height direction, and reduce an influence of the extrusion force on intensity of discharging the emission from the cell 111 during the pressure relief.

In some embodiments, as illustrated in FIG. 3, the number of the cell groups 1 in the battery unit 2 ranges from 1 to 3, that is, the number of the cell groups 1 in the battery unit 2 is one, two, or three. Therefore, on the premise of ensuring the arrangement of the cell row 11, it is also easy to reduce the extrusion force that the cell row 11 bears in the height direction, and reduce the influence of the extrusion force on the intensity of discharging the emission from the cell 111 during the pressure relief.

In some embodiments, as illustrated in FIG. 3, the cell 111 has a thickness direction consistent with a height direction of the battery 100, and the cell 111 has a thickness less than a length of the cell 111 and less than a width of the cell 111. As such, when the height direction of the battery 100 is an up-down direction, the cell 111 is laid flat, which can reduce a height of center of gravity of the cell 111, and can minimize a spattering range of the cell 111.

It can be understood that, as the height of the center of the gravity of the cell 111 reduces, a spattering height of the cell 111 during the pressure relief of the cell 111 through the pressure relief structure 1111 (e.g., an explosion-proof valve). Thus, a spattering influence range of the cell 111 in the up-down direction can be reduced. At the same time, a distance over which the cell 111 may spatter is minimized, which helps to improve safety performance. For example, during the pressure relief of the cell 111 to discharge the emission through the pressure relief structure 1111, since the cell 111 is laid flat, a height of the pressure relief structure 1111 can be lowered, which can effectively lower a height of an eruption position of the pressure relief structure 1111, thereby reducing a diffusion region and a spattering region to improve overall safety the performance of the battery 100.

In the example of FIG. 3, the cell 111 is laid flat, the pressure relief structure 1111 is located at the first end surface 111a, and the first end surface 111a is vertically arranged. The electrical connection terminal 1112 may be located at the second end surface 111b, or at the third end surface 111d, or at the fourth end surface 111e. The second end surface 111b is vertically arranged. The third end surface 111d is a top surface or a bottom surface of the cell 111. The fourth end surface 111e is a side surface of the cell 111 and is also vertically arranged. Of course, the third end surface 111a may be an end surface of the cell 111 in the height direction of the cell 111, and the fourth end surface 111e is an end surface of the cell 111 in the length direction of the cell 111.

In one embodiment, the cell 111 is a ternary lithium battery 100. The ternary lithium battery 100 has a smaller expansion rate than the lithium iron phosphate battery 100, then an expansion deformation amount of the ternary lithium battery 100 is relatively small. Therefore, a constraint requirement for expansion deformation of the ternary lithium battery 100 is relatively low. As a result, the ternary lithium battery 100 can be configured to a scene where the cell 111 is laid flat.

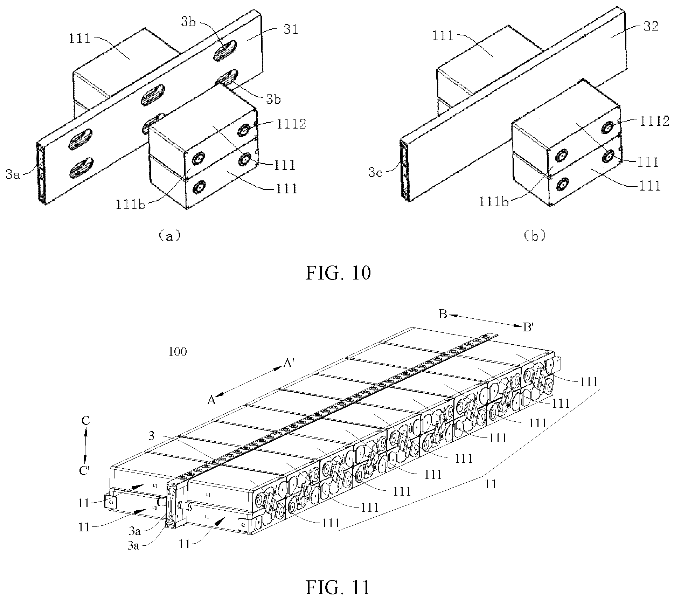

In some embodiments, as illustrated in FIGS. 10 (a) and ⑩, the battery 100 includes a cell group 1 and a discharge member 31. The discharge member 31 is disposed between the two cell rows 11 in one cell group 1 and defines a discharge chamber 3a configured to receive an emission of at least one group 1 discharged from the pressure relief structure 1111. As such, the discharge chamber 3a may collect the emission of the cell 111 to easily realize storage or centralized discharge of the emission of the cells 111, avoiding the insulation failure caused by the leakage of, for example, the particles in the emission of cell 111 to other regions, for example, an electrical connection region between two cells 111.

It can be understood that the discharge chamber 3a may receive emission of the cell 111 directly or indirectly. In addition, the discharge chamber 3a may be used only for storing the emission of the cell 111, which may be used in a case where the emission of the cell 111 is small. The emission is basically not concentrated, for example, the discharge chamber 3a has no discharge opening. Of course, the discharge chamber 3a may discharge the emission after receiving the emission, which may be used in the case where the emission of the cell 111 is relatively large. For example, a discharge opening is formed at the discharge chamber 3a, to allow the emission in the discharge chamber 3a to be discharged through the discharge opening.

In some embodiments, a plurality of cell groups 1 is arranged in a height direction of the cell row 11 to constitute a battery unit 2. In this case, the discharge chamber 3a may be configured to receive an emission discharged from a battery unit 2. As a result, the plurality of cell groups 1 in the battery unit 2 may share the discharge member 31, to reduce the number of discharge members 31 of the battery 100 and simplify the structure of the battery 100.

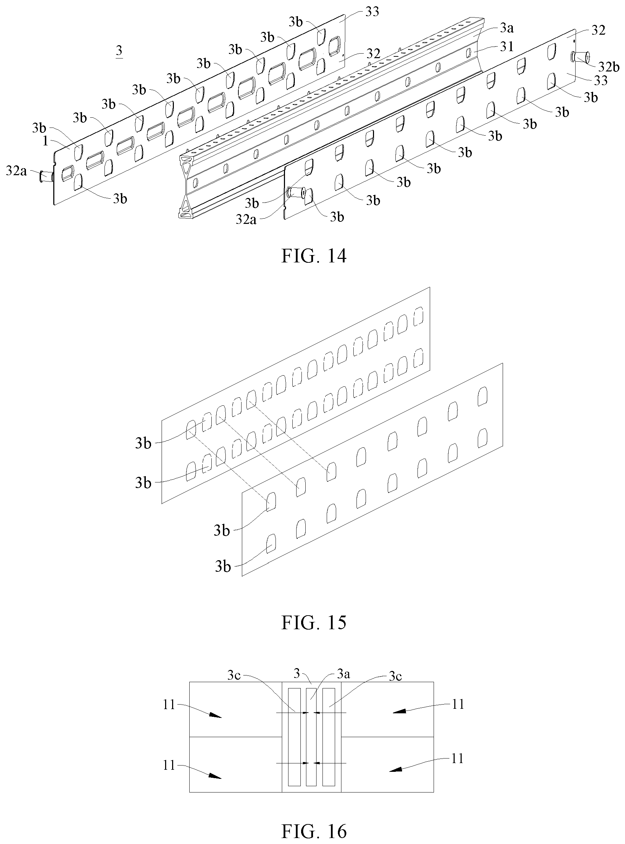

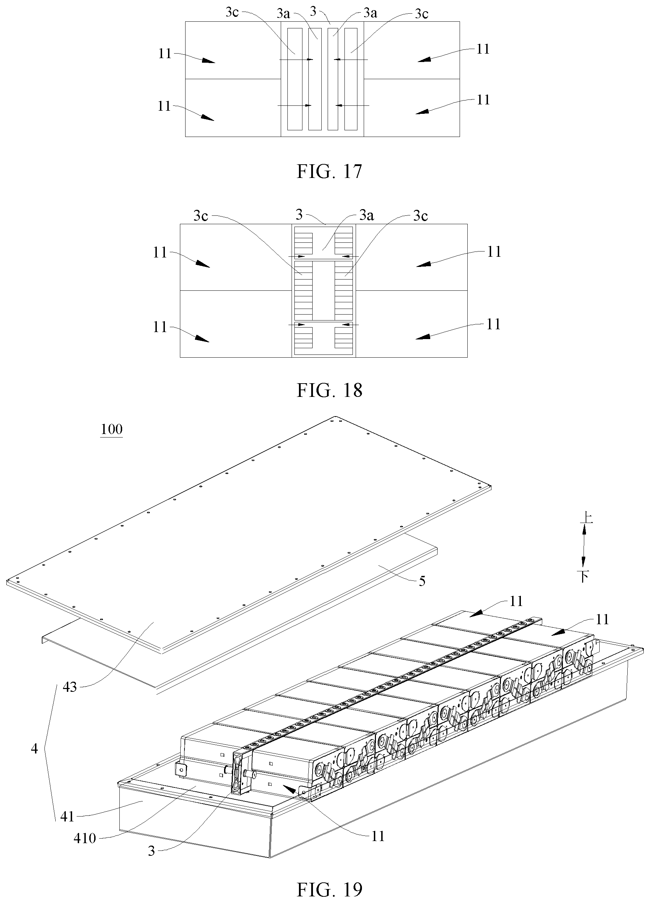

In one embodiment, as illustrated in FIG. 16, one discharge chamber 3a is provided, then two cell rows 11 at two opposite sides of the discharge member 31 share the discharge chamber 3a; or as illustrated in FIG. 17, a plurality of discharge chambers 3a is provided, cell rows 11 at two opposite sides of the discharge member 31 may correspond to different discharge chambers 3a respectively.

In some embodiments, as illustrated in FIGS. 14 and 15, the discharge member 31 has inlet regions 3b corresponding to the pressure relief structures 1111 and formed at side surfaces of the discharge member 31 that face towards the two cell rows 11, and the discharge chamber 3a is configured to receive, through the inlet regions 3b, the emission discharged from the pressure relief structure 1111, to smoothly receive the emission.

In one embodiment, the inlet region 3b may be a discharge inlet formed at the discharge member 31, or the inlet region 3b may also be a weak region formed at the discharge member 31, both of which can ensure that the emission when the pressure relief of the cell 111 is discharged, through the inlet region 3b, to the discharge chamber 3a.

In some embodiments, as illustrated in FIGS. 10 (a), 14, and 15, orthographic projections of the inlet regions 3b at two opposite sides of the discharge member 3 on a direction in which the two cell rows 11 are arranged opposite to each other are offset in a length direction of the discharge member 31, orthographic projections of the inlet regions 3b of at the two opposite sides of the discharge member 31 on the direction in which the two cell rows 11 are arranged opposite to each other are at least partially nonoverlapping in a thickness direction of the thermal management assembly 3. This helps to avoid opposite spraying when the corresponding cells 111 at the two opposite sides of the discharge member 31 discharge the emission respectively, to further reduce the probability of the heat spread.

It can be understood that, in an example of FIG. 15, inlet regions 3b indicated by dotted lines and opposite inlet regions 3b indicated by dotted lines are arranged offset from each other in the length direction of the discharge member 31, and the inlet regions 3b indicated by solid lines and the opposite inlet region 3b indicated by solid lines are arranged aligned with each other in the length direction of the discharge member 31.

In some embodiments, a periphery of each of the inlet regions 3b is provided with an insulation member to easily achieve insulation between the cell 111 and the thermal management assembly 3, and to easily avoid insulation failure caused by an electrical connection between the cell 111 and the thermal management assembly 3 by the particles in the emission when the cell 111 discharges the emission. In this way, the use safety of the cell 111 is further ensured.

For example, when the inlet region 3b is the discharge inlet, the insulation member may be disposed at least at a peripheral wall of the discharge inlet.

In some embodiments, the battery 100 includes a discharge member 31 and a case component 4 including a side enclosure plate 41 and a separation beam 42. The separation beam 42 is disposed in a space 410 enclosed by a side enclosure plate 41. The space 410 is divided into a plurality of accommodation chambers 410a. The accommodation chamber 410a is configured to accommodate the cell row 11. The separation beam 42 is constructed as the discharge member 31. The case component 4 may be the case component 4 illustrated in FIGS. 19 to 24.

It can be seen that the separation beam 42 can serve to receive the emission of the cell row 11 and can simultaneously divide the space 410 into the plurality of accommodation chambers 410a to facilitate the arrangement of the cell row 11. Furthermore, the separation beam 42 can also enhance structural strength of the case component 4, realizing a multi-purpose of the separation beam 42. In this way, the number of beam structures of the battery 100 is appropriately reduced on the premise of ensuring the structural strength of the case component 4 to improve a utilization rate of the space 410 of the case component 4. As a result, the structure of each component inside the case component 4 is more compact, which helps to improve energy density of the battery 100.

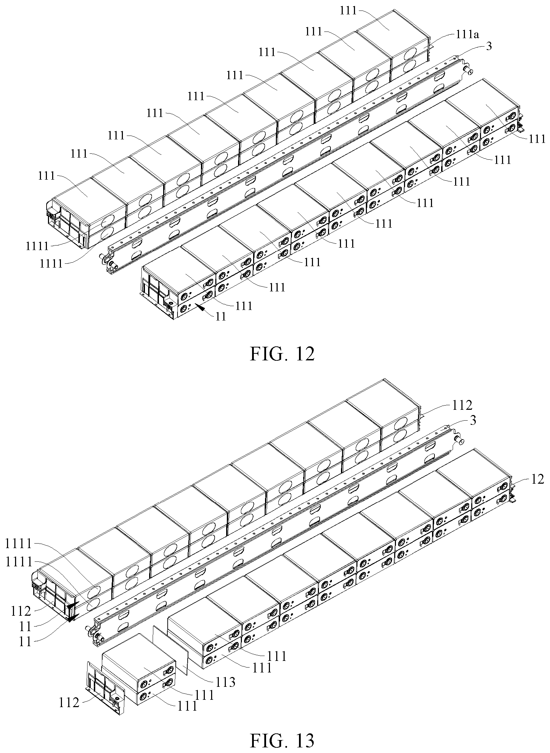

In some embodiments, as illustrated in FIGS. 12 and 13, the cell row 11 includes a plurality of cells 111 sequentially arranged in a length direction of the discharge member 31, and each of the plurality of cells 111 discharges the emission towards the discharge chamber 3a. As such, the emissions discharged by the plurality of cells 111 do not interfere with each other. For example, one cell 111 discharges the emission towards the discharge chamber 3a, but whether an adjacent cell 111 discharges the emission towards the discharge chamber 3a is not affected, which helps to further reduce the probability of the heat spread in the cell row 11 to improve the use safety of the battery 100.

For example, the cell 111 is configured to discharge the emission to the discharge chamber 3a through the inlet region 3b of the discharge member 31, and each cell 111 has an inlet region 3b corresponding thereto.

In one embodiment, in the example of FIG. 13, two ends of the cell row 11 in a length direction of the cell row 11 are provided with end plates 112 respectively to restrict the entire cell row 11 to a movement in the length direction of the cell row 11. Of course, when a plurality of cell rows 11 is sequentially arranged in a height of the discharge member 31, the ends of the plurality of cell rows 11 in a length direction of the cell row 11 may share one end plate 112.

In one embodiment, in the example of FIG. 13, the cell row 11 includes a plurality of cells 111, and a thermal insulation member 113 is provided between two adjacent cells 111.

In some embodiments, as illustrated in FIG. 10 (b), the battery 100 includes a cell group 1 and a heat exchange member 32, and the heat exchange member 32 is disposed between two cell rows 11 in one cell group 1 and configured to exchange heat with at least one of the two cell rows 11. For example, the heat exchange member 32 exchanges heat with the cell 111 to remove heat from the cell 111, or the heat exchange member 32 is configured to transfer heat to the cell 111 to preheat the cell 111. As a result, the cell 111 easily has a suitable operation temperature to ensure a service life of the cell 111.

In one embodiment, the heat exchange member 32 is in direct contact with the cell row 11 for heat exchange, or the heat exchange member 32 and the cell row 11 are in indirect heat exchange through other heat conductive members.

In some embodiments, the battery 100 includes a heat exchange member 32 and a case component 4 including a side enclosure plate 41 and a separation beam 42. The separation beam 42 is disposed in a space 410 enclosed by the side enclosure plate 41. The space 410 is divided into a plurality of accommodation chambers 410a. The accommodation chamber 410a is configured to accommodate the cell row 11. The separation beam 42 is constructed as the heat exchange member 32. The case component 4 may be the case component 4 illustrated in FIGS. 19 to 24.

It can be seen that the separation beam 42 can serve to exchange the heat with the cell row 11 and can simultaneously divide the space 410 into the plurality of accommodation chambers 410a to facilitate the arrangement of the cell row 11. Furthermore, the separation beam 42 can also enhance the structural strength of the case component 4, realizing the multi-purpose of the separation beam 42. In this way, the number of beam structures of the battery 100 is appropriately reduced on the premise of ensuring the structural strength of the case component 4 to improve the utilization rate of the space 410 of the case component 4. As a result, the structure of each component inside the case component 4 is more compact, which helps to improve the energy density of the battery 100.

In some embodiments, as illustrated in FIG. 14, the battery 100 further includes a thermal management assembly 3 disposed between the two cell rows 11 in one cell group 1. the thermal management assembly 3 includes a discharge member 31 and the heat exchange members 32. The discharge member 31 is configured to receive an emission of the at least one group 1 discharged from the pressure relief structure 1111. The heat exchange members 32 are respectively provided at two sides of the discharge member 31 in a thickness direction of the discharge member 31. Each of the heat exchange members 32 is disposed between the discharge member 31 and the cell row 11 and therefore can exchange heat with two heat exchange members 32 simultaneously. Each of the heat exchange members 32 is configured to exchange heat with a cell row 11 at a corresponding side of the members 32. For example, the heat exchange member 32 exchanges heat with the cell 111 to remove heat from the cell 111, or the heat exchange member 32 is configured to transfer heat to the cell 111 to preheat the cell 111. As a result, the cell 111 easily has a suitable operation temperature to ensure the service life of the cell 111.

At least part of the discharge member 31 is configured to exchange heat with the heat exchange member 32, then a part of the discharge member 31 exchanges heat with the heat exchange member 32, or the entire discharge member 31 exchanges heat with the heat exchange member 32. For example, the emission is an emission discharged when the cell 111 experiences thermal runaway, and the emission is discharged by the pressure relief structure 1111 of the cell 111 and has a relatively high temperature. The heat exchange member 32 exchanges heat with the emission in the discharge member 31, allowing the heat exchange member 32 to not only promptly dissipate the heat of the emission through the emission to avoid the heat from concentrating near an eruption position of the cell 111 for a long time, and thus to improve the use safety of the cell 111, but also to cool the emission to reduce the probability of thermal runaway spread of the cell 111, and thus to effectively improve the safety of the cell 111 during release of the thermal runaway of the cell 111.

It can be understood that at least part of the discharge member 31 is configured to exchange heat directly with the heat exchange member 32, for example, at least part of the discharge member 31 is in direct contact with the heat exchange member 32; or at least part of the discharge member 31 is configured to exchange heat indirectly with the heat exchange member 32, for example, at least part of the discharge member 31 indirectly cooperates with the heat exchange member 32 through a heat conductive member.

It can be seen that the thermal management assembly 3 integrates the discharge member 31 and the heat exchange member 32, which has good maintainability, helps to save a space 410 occupied by the thermal management assembly 3, and can improve a space utilization rate of the battery 100. In addition, the heat exchange member 32 can also exchange heat with at least part of the discharge member 31 to promptly dissipate the heat of the emission, and thus to avoid the heat from concentrating near an eruption position of the cell 111 for a long time. Meanwhile, the heat exchange member 32 can also cool the emission to reduce the probability of spread of the thermal runaway of the cell 111. Therefore, the safety of the cell 111 during the release of thermal runaway of the cell 111 is effectively improved to ensure the use safety and the use reliability of the cell 111.

In addition, in a thickness direction of the thermal management assembly 3, the heat exchange member 32 is disposed outside the discharge member 31 such that the heat exchange member 32 is disposed, relative to the discharge member 31, adjacent to the cell 111 that is disposed outside the thermal management assembly 3 in the thickness direction of the thermal management assembly 3. That is, the thermal management assembly 3 and the cell 111 are arranged in the thickness direction of the thermal management assembly 3, and the heat exchange member 32 is closer to the cell 111 than the discharge member 31 in the thickness direction of the thermal management assembly 3 to further improve a heat exchange effect of the heat exchange member 32 on the cell 111. Moreover, in this case, the discharge member 31 is disposed at a side of the heat exchange member 32 facing away from the cell 111, which allows the heat exchange member 32 not only to still exchange heat with the discharge member 31 but to separate the cell 111 from the discharge member 31. As a result, the heat exchange member 32 can separate the cell 111 from the emission to effectively avoid the adversely thermal effect from the heat of the emission on the cell 111, and thus to ensure the reliable use of the cell 111.

In the present disclosure, the heat exchange member 32 and the discharge member 31 may be formed separately and may cooperate with each other through a fitting means; or the heat exchange member 32 and the discharge member 31 may be formed integrally, for example, the thermal management assembly 3 may be an integral extrusion member. Thus, the thermal management assembly 3 can select an appropriate processing method based on actual needs.

In some embodiments, as illustrated in FIGS. 11 to 14, the thermal management assembly 3 extends into an elongated shape. As such, a length of the thermal management assembly 3 (e.g. a direction AA' in FIG. 11) is greater than a height of the thermal management assembly 3 (e.g., a direction CC' in FIG. 11), while the height of the thermal management assembly 3 is greater than a thickness of the thermal management assembly 3. The heat exchange member 32 and the discharge member 31 are arranged in the thickness direction of thermal management assembly 3 (e.g., a direction BB' in FIG. 11). As such, the heat exchange member 32 and the discharge member 31 are arranged in a relatively simple manner, which facilitates the processing and manufacturing of the thermal management assembly 3. At the same time, an area of wall surfaces of the thermal management assembly 3 at two sides of the thermal management assembly 3 in the thickness of the thermal management assembly 3 is larger than an area of other wall surfaces of the thermal management assembly 3, which helps to increase the area of the heat exchange member 32 for heat exchange with the cell 111 to further ensure the operation temperature of the cell 111, and meanwhile, helps to increase an area of the heat exchange member 32 for heat exchange with the discharge member 31, and/or to increase a heat exchange area between the heat exchange member 32 and the discharge member 31. Thus, a heat conductive area between the heat exchange member 32 and the discharge member 31 is increased to improve a heat dissipation effect of the heat exchange member 32 on the emission. In this way, a cooling effect of the heat exchange member 32 on the emission is improved.

It should be noted that, in the description of the present disclosure, terms "and/or" describes an association relationship between correlated objects, including three relationships. For example, "A and/or B" can mean A only, B only, or both A and B.

For example, in the example of FIG. 12, the thermal management assembly 3 may extend into a beam structure, which can enhance structural strength and structural stability of the battery 100.

Of course, the arrangement of the heat exchange member 32 and the discharge member 31 is not limited to this. In other embodiments, the heat exchange member 32 and the discharge member 31 are sequentially arranged in a width direction of the thermal management assembly 3, but not limited to this.

In some embodiments, as illustrated in FIGS. 14, 16 to 18, the heat exchange member 32 defines a heat exchange chamber 3c configured to receive a heat exchange medium. The heat exchange medium exchanges heat with the cell 111 and the discharge member 31 to realize heat requirements of the cell 111 and the discharge member 31 at least by utilizing sensible heat of the heat exchange medium. The heat exchange chamber 3c have an inlet 32a and an outlet 32b that are respectively in communication with the heat exchange chambers 3c, and the heat exchange medium is allowed to flow into the heat exchange chambers 3c through the inlet 32a and flow out of the heat exchange chambers 3c through the outlet 32b. It can be seen that the heat exchange medium can flow in the heat exchange chambers 3c, as such, the heat exchange medium can continuously exchange heat with the discharge member 31 and the cell 111 due to fluidity of the heat exchange medium, taking away the heat accumulated in the discharge member 31, reducing a probability of heat concentration, and improving safety. The heat exchange chambers 3c at the two sides of the discharge member 31 in the thickness of the discharge member 31 are connected in series or in parallel in order to allow for a flexible connection of the heat exchange chamber 3c.

The inlet 32a and the outlet 32b may be arranged based on actual requirements. For example, the heat exchange member 32 extends into an elongated shape, the inlet 32a is located at an end of the heat exchange member 32 in the length direction of the heat exchange member 32, and the outlet 32b is located at another end of the heat exchange member 32 in the length direction of the heat exchange member 32, in order to ensure a heat exchange path length of the heat exchange chambers 3c.

In one embodiment, the heat exchange member 32 defines a heat exchange chamber 3c, or the discharge member 31 and the heat exchange member 32 define a heat exchange chambers 3c.

In one embodiment, the heat exchange medium is gas, or liquid, or a gas-liquid mixture. For example, the heat exchange medium is water, or a refrigerant, but not limited thereto.

In some embodiments, as illustrated in FIG. 18, the heat exchange chamber 3c include a plurality of heat exchange branch chambers, which helps to increase a contact area between the heat exchange member 32 and the heat exchange medium, in order to enhance the heat exchange effect of the heat exchange member 32 on the cell 111 and the discharge chamber 3a.

In some embodiments, as illustrated in FIGS. 14 and 18, the heat exchange member 32 has an inlet 32a and an outlet 32b that are respectively in communication with the heat exchange chambers 3c, and each of the plurality of heat exchange branch chambers is in communication with the inlet 32a and the outlet 32b. As such, the plurality of heat exchange branch chambers is connected in parallel. A heat exchange medium at the inlet 32a is distributed to the plurality of heat exchange branch chambers, and the heat exchange medium in each of the plurality of heat exchange branch chambers flows out of the heat exchange branch chamber through the outlet 32b, in order to ensure a heat exchange effect of each of the plurality of heat exchange branch chambers.

Of course, in other embodiments of the present disclosure, the plurality of heat exchange branch chambers may also be connected in series, or at least two of the plurality of heat exchange branch chambers 111 may be connected in series and at least two of the plurality of heat exchange branch chambers 111 may be connected in parallel.

In some embodiments, as illustrated in FIG. 18, a heat conductive material member is provided in the heat exchange chambers 3c, which helps to increase the contact area between the heat exchange member 32 and the heat exchange medium, thereby enhancing the heat exchange effect of the heat exchange member 32 on the cell 11 and the discharge chamber 3a while enhancing structural strength of the heat exchange chamber 3c.

In one embodiment, the thermally conductive material member is a metallic member.

In one embodiment, in an example of FIG. 18, the heat exchange chamber 3c is divided into a plurality of heat exchange branch chambers by the heat conductive material member.

It can be understood that the plurality of heat exchange branch chambers divided by the heat conductive member material member may be connected in series and/or in parallel. Of course, the present disclosure is not limited thereto, for example, the heat conductive material member is formed as a flow guide rib.

In some embodiments, as illustrated in FIG. 14, an outer side plate 33 of the thermal management assembly 3 is configured as the heat exchange member 32, the outer side plate 33 has an inlet region 3b corresponding to the pressure relief structure 1111, the discharge member 31 defines a discharge chamber 3a. The discharge chamber 3a is configured to receive, through the inlet region 3b, an emission discharged from the pressure relief structure 1111 in order to ensure smooth release of the emission. Meanwhile, the heat exchange member 32 may participate in forming an outer wall of the thermal management assembly 3 in order to ensure the heat exchange effect of the heat exchange member 32 on the cell 111.

In one embodiment, the discharge member 31 defines the discharge chamber 3a, or the discharge member 31 and the heat exchange member 32 define the discharge chamber 3a.

In some embodiments, a heat conductive member is disposed between the heat exchange member 32 and the discharge member 31 in order to ensure heat exchange efficiency between the heat exchange member 32 and the discharge member 31, thereby ensuring a cooling effect of the heat exchange member 32 on the emission.

In one embodiment, the heat conductive member is a heat conductive adhesive or a heat conductive plate, and a material of the heat conductive plate can be selected with appropriate heat conductivity based on actual requirements. For example, the heat conductive member is a metallic member.

It should be understood that when the heat exchange member 32 and the discharge member 31 are formed integrally, the heat conductive member between the heat exchange member 32 and the discharge member 31 may be formed as a heat conductive wall, and two opposite sides of the heat conductive wall may be the heat exchange chamber 3c and the discharge chamber 3a respectively.

In some embodiments, as illustrated in FIGS. 19 to 22, the battery 100 further includes a case component 4. The case component 4 includes a side enclosure plate 41 and a separation beam 42 disposed in a space 410 enclosed by the side enclosure plate 41. The space 410 is divided into a plurality of accommodation chambers 410a. The accommodation chamber 410a is configured to accommodate the cell row 11. The separation beam 42 has the cell 111 provided at two sides of the separation beam 42 in a thickness direction of the separation beam 42. The separation beam 42 is constructed as the thermal management assembly 3.

It can be seen that the separation beam 42 can not only divide the space 410 into the plurality of accommodation chambers 410a, but also enhance the structural strength of the case component 4, further realizing the multi-purpose of the separation beam 42. In this way, the number of beam structures of the battery 100 is appropriately reduced on the premise of ensuring the structural strength of the case component 4 to improve the utilization rate of the space 410 of the case component 4. As a result, the structure of each component inside the case component 4 is more compact, which helps to improve the energy density of the battery 100.

In one embodiment, two ends of the separation beam 42 in a length direction of the separation beam 42 are respectively fixedly connected to the corresponding side enclosure plates 41; or, the case component 4 includes a bottom plate 44, and the separation beam 42 is fixedly connected to the bottom plate 44; or, the case component 4 includes a top cover 43 and a bottom plate 44, and the separation beam 42 is fixedly connected to at least one of the top cover 43 and the bottom plate 44.

It can be understood that when the separation beam 42 is constructed as the thermal management assembly 3, if the thermal management assembly 3 defines a heat exchange chamber 3c, the heat exchange chamber 3c has an inlet 32a and an outlet 32b, and a heat exchange medium is allowed to flow into the heat exchange chamber 3c through the inlet 32a and flow out of the heat exchange chamber 3c through the outlet 32b, different heat exchange paths or heat management circuits may be set based on different objects to which the separation beam 42 is fixedly connected in order to allow for circular flow of the heat exchange medium on the heat exchange paths. Likewise, when the separation beam 42 is constructed as the thermal management assembly 3, if the thermal management assembly 3 defines a discharge chamber 3a, the discharge chamber 3a has a discharge inlet and a discharge opening, and an emission is allowed to be received and flow into the discharge chamber 3a through the discharge inlet and flow out of the discharge chamber 3a through the discharge opening, different discharge paths may be set based on objects to which the separation beam 42 is fixedly connected in order to achieve the smooth discharge of emission.

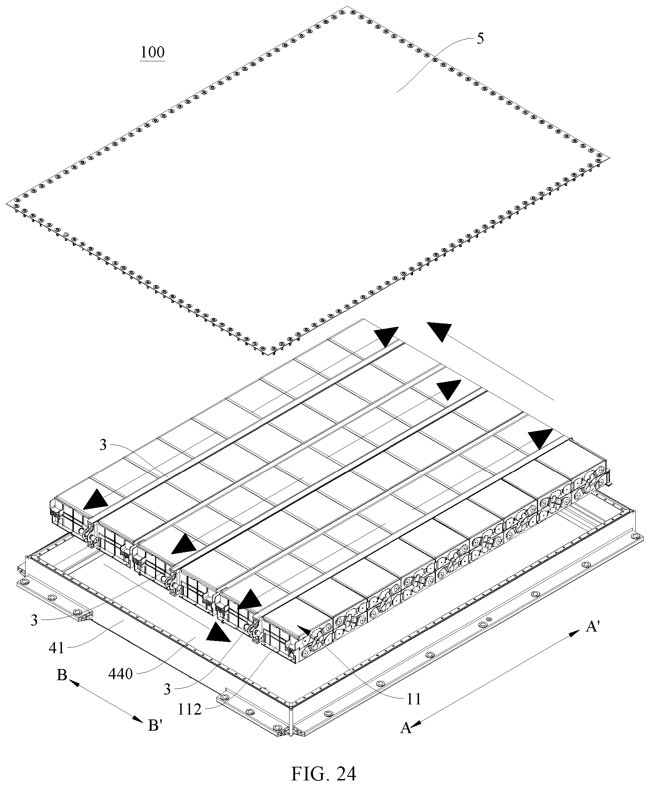

In one embodiment, in an example illustrated in FIG. 24, the side enclosure plate 41 is formed with a discharge path in communication with the discharge chamber 3a of the discharge member 31. The emission of the cell 111 can flow to the discharge path through the discharge chamber 3a to facilitate final discharge of the emission, especially when there are plenty of emissions of the cell 111, to avoid concentration of the emissions and ensure the smooth pressure relief of the cell 111.

For example, two ends of the separation beam 42 in a length direction of the separation beam 42 are fixedly connected to side enclosure plates 41 corresponding to the two ends of the separation beam 42 respectively, the discharge chamber 3a penetrates one of the two ends of the separation beam 42 in the length direction of the separation beam 42, the side enclosure plate 41 corresponding to at least one of the two ends of the separation beam 42 is formed with a discharge path in communication with the discharge chamber 3a; or, the discharge chamber 3a penetrates each of two ends of the separation beam 42 in a length direction of the separation beam 42, and the side enclosure plates 41 at the two ends of the separation beam 42 in the length direction of the separation beam 42 are respectively formed with discharge paths in communication with the discharge chamber 3a.

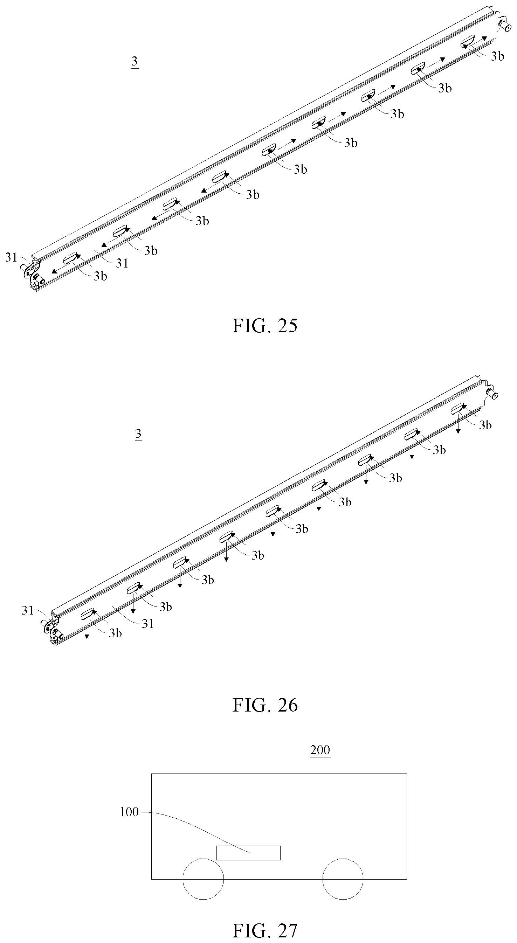

In other embodiments, as illustrated in FIG. 26, when the separation beam 42 is constructed as the thermal management assembly 3, the case component 4 includes a bottom plate 44, the separation beam 42 has an air exhaust opening in communication with the discharge chamber 3a and defined at a side of the separation beam 42 facing towards the bottom plate 44, and the bottom plate 44 is formed with a discharge path in communication with the air exhaust opening, such that the discharge path is in communication with the discharge chamber 3a.

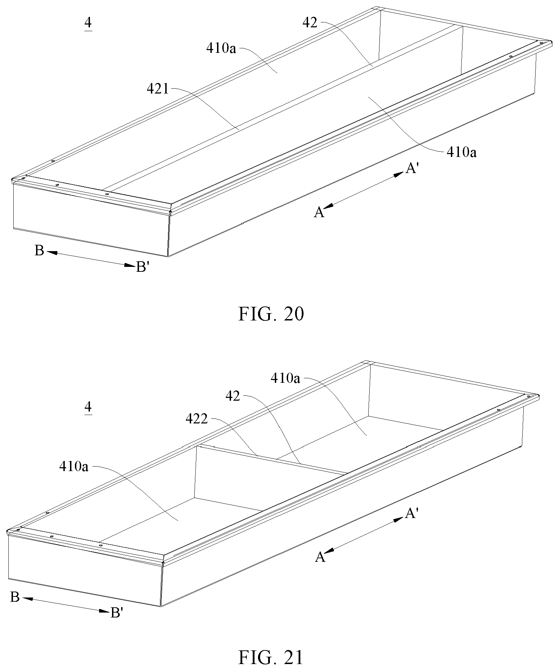

In some embodiments, as illustrated in FIG. 20, the separation beam 42 includes a longitudinal beam 421 extending in a length direction of the case component 4, the longitudinal beam 421 is constructed as the thermal management assembly 3, and the longitudinal beam 421 has the cells 111 provided at two sides of the longitudinal beam 421 in a thickness direction of the longitudinal beam 421.

In some embodiments, as illustrated in FIG. 21, the separation beam 42 includes a transverse beam 422 extending in a width direction of the case component 4, the transverse beam 422 is constructed as the thermal management assembly 3, and the transverse beam 422 has the cells 111 provided at two sides of the transverse beam 422 in a thickness direction of the transverse beam 422.

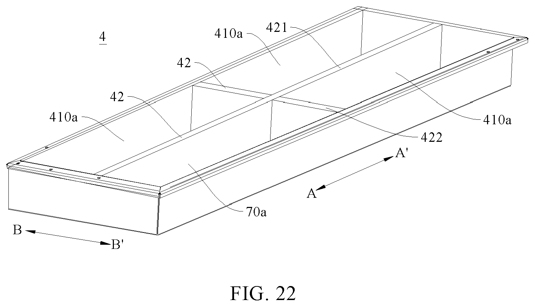

In some embodiments, as illustrated in FIG. 22, the separation beam 42 includes a longitudinal beam 421 and a transverse beam 422. The longitudinal beam 421 extends in a length direction of the case component 4 and in a width direction of the case component 4, and at least one of the longitudinal beam 421 and the transverse beam 422 is constructed as the thermal management assembly 3.

Thus, the thermal management assembly 3 may be formed as a transverse beam 422 and/or a longitudinal beam 421 in the case component 4, which helps to flexibly arrange the case component 4 to better meet the heat exchange requirements of the cell 111.

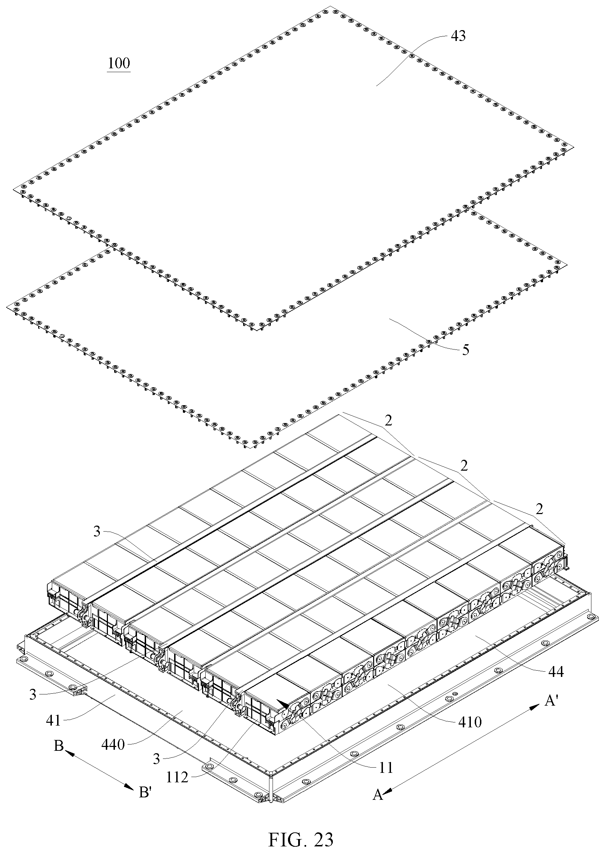

In some embodiments, as illustrated in FIG. 23, the case component 4 includes a top cover 43, and the thermal management assembly 3 is disposed in the top cover 43, and the top cover 43 may cover a top side of the accommodation chamber 410a. The top cover 43 can apply a certain force to the thermal management assembly 3 to ensure stable mounting of the thermal management assembly 3. For example, the thermal management assembly 3 may be fixedly connected to the top cover 43 (e.g., the thermal management assembly 3 and the top cover 43 are fixed through a threaded fastener). Of course, the thermal management assembly 3 may also directly or indirectly abut against the top cover 43.

In some embodiments, as illustrated in FIG. 23, the case component 4 includes a bottom plate 44, and the thermal management assembly 3 is disposed in the bottom plate 44. The bottom plate 44 may be disposed below the accommodation chamber 410a, and therefore the bottom plate 44 directly or indirectly supports the cells 111. The bottom plate 44 may apply a certain force to the thermal management assembly 3 to ensure stable mounting of the thermal management assembly 3. For example, the thermal management assembly 3 may be fixedly connected to the bottom plate 44 (e.g., the thermal management assembly 3 may be fixedly connected to the bottom plate 44 through a threaded fastener). Of course, the thermal management assembly 3 may also directly or indirectly abut against the base plate 44.

In some embodiments, as illustrated in FIG. 23, the case component 4 includes a top cover 43 and a bottom plate 44, and the thermal management assembly 3 is disposed in at least one of the top cover 43 and the bottom plate 44 to ensure stable mounting of the thermal management assembly 3.

Of course, the thermal management assembly 3 may not be connected to a top cover 43 and a bottom plate 44.

In some embodiments, as illustrated in FIG. 19, the battery 100 further includes a case component 4 defining an accommodation chamber 410a configured to accommodate the cell row 11 and a fixing member 5 disposed in the case component 4. The fixing member 5 is disposed at a side of the cell row 11 in a thickness of the cell row 11 and abuts against outmost cell rows 11. As such, the fixing member 5 abuts with a side surface of outmost cell 111 to apply a certain binding force to all the cells 111 of the battery 100. When the fixing member 5 abuts with large surfaces of the outermost cells 111, stable performance of the cells 111 after expansion and deformation of the cell 11 can be ensured. The fixing member 5 is fixedly connected to the case component 4 in order to facilitate reliable mounting of the fixing member 5. For example, the fixing member 5 is fixedly connected to the side enclosure plate 41 of the case component 4.

For example, in the example of FIG. 19, the fixing member 5 is disposed at a top side of the cell rows 11, and the fixing member 5 directly or indirectly abuts with large surfaces of uppermost cell rows 11. When the cell 111 expands, the fixing member 5 deforms upwards to be arched, and therefore the fixing member 5 exerts a downward force on the cell 111 at least when the cell 111 expands to be deformed.

In one embodiment, the fixing member 5 is formed in a plate-like structure in order to simplify the structure of the fixing member 5. Of course, the fixing member 5 may also have a grid structure, a mesh structure, or the like.

An electrical device 200 according to an embodiment of a second aspect of the present disclosure includes the battery 100 according to the embodiment of the first aspect of the present disclosure. The battery 100 is configured to provide electric energy for the electrical device 200. Thus, use safety and use reliability of the electrical device 200 is easily improved by using the above-mentioned battery 100.

In one embodiment, as illustrated in FIG. 27, when the battery 100 is applied in a vehicle, the battery 100 may be disposed at a bottom, a head, or a tail of the vehicle. The battery 100 may be configured to supply power to the vehicle. For example, the battery 100 may serve as an operating power source for the vehicle. The vehicle may also include a controller and a motor. The controller is configured to control the battery 100 to supply power to the motor, for example, to meet operational power consumption requirements for starting, navigation, and driving of the vehicle.

In some embodiment of the present disclosure, battery 100 can not only serve as an operating power supply of the vehicle but also can serve as a drive power supply of the vehicle to replace or partially replace fuel or natural gas to provide driving power for the vehicle.

Other structures and operations of the electrical device 200 according to the embodiments of the present disclosure are known to those skilled in the art and will not be described in detail herein.

For example, as illustrated in FIGS. 11 to 13, and FIG. 23, the battery 100 includes a plurality of battery units 2 sequentially arranged in a second direction, each of the plurality of battery unit 2 includes a plurality of cell groups 1 sequentially arranged in a third direction, each of the plurality of cell groups 1 includes two cell rows 11 sequentially arranged in the second direction, and each of the two cell rows 11 includes a plurality of cells 111 sequentially arranged in a first direction. For each battery unit 2, a thermal management assembly 3 is disposed between two opposite cell groups 1, and in the third direction, a plurality of cell groups 1 at one side of the thermal management assembly 3 share one thermal management assembly 3. The first direction, the second direction, and the third direction are perpendicular to each other. The number of cell groups 1 in battery unit 2 is smaller than the number of cells 111 in cell row 11.

In one cell group 1, each cell 111 in one of the two cell rows 11 has a first end surface 111a facing towards another one of the two cell rows, and the first end surface 111a is provided with a pressure relief structure 1111. In one cell group 1, each cell 111 in one of the two cell rows 11 has a second end surface 111b facing away from another one of the two cell rows 11, and the cell 111 has an electrical connection terminal 1112 at the second end surface 111b. The thermal management assembly 3 includes a discharge member 31 defining a discharge chamber 3a configured to receive an emission discharged from the pressure relief structure 1111 by a plurality of cell groups 1 of the battery unit 2. The thermal management assembly 3 further includes a heat exchange member 32 with which at least part of the discharge chamber 3a is configured to exchange heat. The heat exchange member 32 is disposed between the discharge chamber 3a and the cell row 11 and configured to exchange heat with a plurality of cell rows 11 at corresponding sides of the heat exchange member 32 respectively.

The battery 100 further includes a case component 4 including a side enclosure plate 41 and a separation beam 41. The separation beam 42 is disposed in a space 410 enclosed by the side enclosure plate 41. The space 410 is divided into a plurality of accommodation chambers 410a. The accommodation chamber 410a is configured to accommodate the cell row 11. The separation beam 42 is constructed as the thermal management assembly 3. The separation beam 42 includes a longitudinal beam 421 extending in a length direction of the case component 4. The longitudinal beam 421 is constructed as the thermal management assembly 3. The side enclosure plate 41 is formed with a discharge path in communication with a discharge chamber 3a of the longitudinal beam 421 in order to discharge the emission of the cell 111 out of the battery 100.

Although embodiments of the present disclosure have been illustrated and described, it is conceivable for those of ordinary skill in the art that various changes, modifications, replacements, and variations can be made to these embodiments without departing from the principles and spirit of the present disclosure. The scope of the present disclosure shall be defined by the claims as appended and their equivalents.

## Claims

1. A battery (100), comprising:
at least one cell group (1), each of the at least one cell group (1) comprising two cell rows (11), each of the two cell rows (11) comprising at least one cell (111), wherein in one of the at least one cell group (1), each of the at least one cell (111) in one of the two cell rows (11) has a first end surface (111a) facing towards another one of the two cell rows (11), the first end surface (111a) being provided with a pressure relief structure (1111), and the cell (111) having an electrical connection terminal (1112) at a surface of the cell (111) other than the first end surface (111a).

2. The battery (100) according to claim 1, wherein in one of the at least one cell group (1), each of the at least one cell (111) in one of the two cell rows (11) has a second end surface (111b) facing away from another one of the two cell rows (11), the electrical connection terminal (1112) of the cell (111) being disposed at the second end surface (111b).

3. The battery (100) according to claim 1, wherein in one of the at least one cell group (1), each of the at least one cell (111) in one of the two cell rows (11) has a second end surface (111b) facing away from another one of the two cell rows (11) and a peripheral wall surface (111c) located between the first end surface (111a) and the second end surface (111b), the electrical connection terminal (1112) of the cell (111) being disposed at the peripheral wall surface (111c).

4. The battery (100) according to claim 3, wherein:
each of the two cell rows (11) comprises a plurality of cells (111) arranged in a first direction;
the two cell rows of the cell group (1) are arranged in a second direction; and
the peripheral wall surface (111c) comprises two third end surfaces (111d) opposite to each other in a third direction, the electrical connection terminal (1112) of the cell (111) being disposed at the third end surface (111d), and the first direction, the second direction and the third direction being perpendicular to each other.

5. The battery (100) according to any one of claims 1 to 4, wherein in one of the at least one cell group (1), orthographic projections of the pressure relief structures (1111) in the two cell rows (11) in a direction in which the two cell rows (11) are arranged opposite to each other are offset.

6. The battery (100) according to claim 5, wherein in one of the at least one cell group (1), the pressure relief structures (1111) in the two cell rows (11) are offset from each other in a length direction of the cell row (11) or a height direction of the cell row (11).

7. The battery (100) according to claim 5 or 6, wherein:
the pressure relief structure (1111) is disposed at a middle part of the first end surface (111a); and
in one of the at least one cell group (1), orthographic projections of the cells (111) in the two cell rows (11) in the direction in which the two cell rows (11) are arranged opposite each other are offset.

8. The battery (100) according to claim 7, wherein in one of the at least one cell group (1), the cells (111) in the two cell rows (11) are offset from each other in a length direction of the battery (11).

9. The battery (100) according to any one of claims 1 to 8, wherein each of the two cell rows (11) comprises a plurality of cells (111) arranged in a length direction of the cell row (11).

10. The battery (100) according to claim 9, wherein the at least one cell group (1) comprises a plurality of cell groups (1), the plurality of cell groups (1) being arranged in a height direction of the cell row (11) to constitute a battery unit (2).

11. The battery (100) according to claim 10, wherein the number of the plurality of cell groups (1) in the battery unit (2) is smaller than the number of the plurality of cells (111) in each of the two cell rows (11).

12. The battery (100) according to claim 10 or 11, wherein the number of the plurality of cell groups (1) in the battery unit (2) ranges from 1 to 3.

13. The battery (100) according to any one of claims 1 to 12, wherein the cell (111) has a thickness direction consistent with a height direction of the battery (100).

14. The battery (100) according to claim 13, wherein the cell (111) is a ternary lithium battery (100).

15. The battery (100) according to any one of claims 1 to 14, further comprising:
a discharge member (31) disposed between the two cell rows (11) in one cell group (1) and defining a discharge chamber (3a), the discharge chamber (3a) being configured to receive an emission of the at least one cell group (1) discharged from the pressure relief structure (1111).

16. The battery (100) according to claim 15, wherein the discharge member (31) has inlet regions (3b) corresponding to the pressure relief structures (1111) and formed at side surfaces of the discharge member (31) that face towards the two cell rows (11) respectively, the discharge chamber (3a) being configured to receive, through the inlet regions (3b), the emission discharged from the pressure relief structures (1111).

17. The battery (100) according to claim 16, wherein orthographic projections of the inlet regions (3b) at two opposite sides of the discharge member (31) in a direction in which the two cell rows are arranged are offset in a length direction of the discharge member (31).

18. The battery (100) according to claim 16 or 17, wherein a periphery of each of the inlet regions (3b) is provided with an insulation member.

19. The battery (100) according to any one of claims 15 to 18, further comprising:
a case component (4) comprising a side enclosure plate (41) and a separation beam (42) disposed in a space (410) enclosed by the side enclosure plate (41), the space (410) being divided into a plurality of accommodation chambers (410a) through the separation beam (42), each of the plurality of accommodation chambers (410a) being configured to accommodate the cell row (11), and the separation beam (42) being constructed as the discharge member (31).

20. The battery (100) according to any one of claims 1 to 14, wherein further comprising:
a heat exchange member (32) disposed between the two cell rows (11) in one cell group (1) and configured to exchange heat with at least one of the two cell rows (11).

21. The battery (100) according to claim 20, further comprising:
a case component (4) comprising a side enclosure plate (41) and a separation beam (42) disposed in a space (410) enclosed by the side enclosure plate (41), the space (410) being divided into a plurality of accommodation chambers (410a) through the separation beam (42), each of the plurality of accommodation chambers (410a) being configured to accommodate the cell row (11), and the separation beam (42) being constructed as the heat exchange member (32).

22. The battery (100) according to any one of claims 1 to 14, further comprising:
a thermal management assembly (3) disposed between the two cell rows (11) in one cell group (1) and comprising a discharge member (31) and heat exchange members (32), the discharge member (31) being configured to receive an emission of the at least one cell group (1) discharged from the pressure relief structure (1111), the heat exchange members (32) being respectively provided at two sides of the discharge member (31) in a thickness direction of the discharge member (31), each of the heat exchange members (32) being disposed between the discharge member (31) and the cell row (11) and configured to exchange heat with a cell row (11) at a corresponding side of the heat exchange member (32), and at least part of the discharge member (31) being configured to exchange heat with the heat exchange member (32).

23. The battery (100) according to claim 22, wherein each of the heat exchange member (32) defines a heat exchange chamber (3c), the heat exchange chamber (3c) having an inlet (32a) and an outlet (32b), a heat exchange medium being allowed to flow into the heat exchange chamber (3c) through the inlet (32a) and flow out of the heat exchange chamber (3c) through the outlet (32b), and the heat exchange chambers (3c) at the two sides of the discharge member (31) in the thickness direction of the discharge member (31) being connected in series or in parallel.

24. The battery (100) according to claim 22 or 23, wherein an outer side plate (33) of the thermal management assembly (3) is constructed as the heat exchange member (32), the outer side plate (33) having an inlet region (3b) corresponding to the pressure relief structure (1111), the discharge member (31) defining a discharge chamber (3a), and the discharge chamber (3a) being configured to receive, through the inlet region (3b), an emission discharged from the pressure relief structure (1111).

25. The battery (100) according to any one of claims 22 to 24, wherein a heat conductive member is disposed between the heat exchange member (32) and the discharge member (31).

26. The battery (100) according to any one of claims 22 to 25, further comprising:
a case component (4) comprising a side enclosure plate (41) and a separation beam (42) disposed in a space (410) enclosed by the side enclosure plate (41), the space (410) being divided into a plurality of accommodation chambers (410a) through the separation beam (42), each of the plurality of accommodation chambers (410a) being configured to accommodate the cell row (11), and the separation beam (42) being constructed as the thermal management assembly (3).

27. The battery (100) according to claim 26, wherein:
the separation beam (42) comprises a longitudinal beam (421) extending in a length direction of the case component (4); or
the separation beam (42) comprises a transverse beam (422) extending in a width direction of the case component (4); or
the separation beam (42) comprises a longitudinal beam (421) extending in a length direction of the case component (4) and a transverse beam (422) extending in a width direction of the case component (4).

28. The battery (100) according to claim 26 or 27, wherein the side enclosure plate (41) is formed with a discharge path in communication with the discharge chamber (3a) of the discharge member (31).

29. The battery (100) according to any one of claims 22 to 28, further comprising a case component (4), the case component (4) comprising a top cover (43), and the thermal management assembly (3) being disposed in the top cover (43).

30. The battery (100) according to any one of claims 22 to 28, further comprising a case component (4), the case component (4) comprising a bottom plate (44), and the thermal management assembly (3) being disposed in the bottom plate (44).

31. The battery (100) according to any one of claims 1 to 30, further comprising:
a case component (4) defining an accommodation chamber (410a) configured to accommodate the cell row (11); and
a fixing member (5) disposed in the case component (4) and fixedly connected to the case component (4), the fixing member (5) being disposed at a side of the cell row (11) in a thickness direction of the cell row (11) and abutting against outermost cell rows (11).

32. An electrical device (200), comprising the battery (100) according to any one of claims 1 to 31, wherein the battery (100) is configured to provide electric energy for the electrical device (200).
